# EUROPEAN PATENT APPLICATION

(11) **EP 4 131 479 A1**
(43) Date of publication of application: **08.02.2023**
(21) Application number: 21793115.3
(22) Date of filing: 21.04.2021
(51) Int. Cl.: H01M 4/134, H01M 4/62, H01M 4/1395, H01M 10/0525

(54) **METAL NEGATIVE ELECTRODE, PREPARATION METHOD THEREFOR, AND SECONDARY BATTERY**

(30) Priority: 21.04.2020 CN 202010317947
(71) Applicant: Huawei Technologies Co., Ltd., Shenzhen, Guangdong 518129, (CN)
(72) Inventor: HONG, Xiang, Shenzhen, Guangdong 518129 (CN)
(74) Representative: Gill Jennings & Every LLP
(86) International application number: PCT/CN2021/088558
(87) International publication number: WO 2021/213413

(57) **Abstract**

This application provides a metal negative electrode, a preparation method using the metal negative electrode, and a secondary battery. The metal negative electrode includes a metal negative electrode body (10) and a protective layer formed on a surface of one side or each of two sides of the metal negative electrode body (10). The protective layer includes a liquid-state or gel-state inner layer (11) that has an ability to dissolve alkali metal and a solid-state outer layer (12) has a high ionic conductivity. The liquid-state or gel-state inner layer (11) that has an ability to dissolve alkali metal includes at least one of an aromatic hydrocarbon small molecule compound and a polymer containing an aromatic hydrocarbon group that have an ability to accept an electron, and at least one of an ether small molecule solvent, an amine small molecule solvent, a thioether small molecule solvent, a polyether polymer, a polyamine polymer, and a polythioether polymer that have an ability to complex lithium ions. The protective layer on the surface of the metal negative electrode can effectively suppress dendrite growth on the surface of the alkali metal negative electrode and battery safety and life problems caused by dendrites during a battery charging or discharging process.

## Description

This application claims priority to Chinese Patent Application No. 202010317947.0, filed with the China National Intellectual Property Administration on April 21, 2020 and entitled "METAL NEGATIVE ELECTRODE, PREPARATION METHOD THEREFOR, AND SECONDARY BATTERY", which is incorporated herein by reference in its entirety.

### TECHNICAL FIELD

Embodiments of this application relate to the field of secondary battery technologies, and in particular, to a metal negative electrode and a secondary battery assembled by using the metal negative electrode.

### BACKGROUND

With the development of economy and technology, industries from portable electronic devices (mobile phones, tablet computers, and notebook computers) to unmanned aerial vehicles and electric vehicles urgently require safer energy storage devices with a higher energy density, a higher power density, and longer cycle life. However, an energy density of a lithium ion battery based on a traditional graphite negative electrode is close to the ceiling, and cannot meet increasing demands for battery life and standby time. In a large-scale energy storage field, high costs of a non-lithium battery technology, such as a sodium ion battery, cannot support its widespread use in the field. Alkali metal is characterized by a high theoretical specific capacity and a low chemical potential. Using an alkali metal negative electrode can greatly improve a battery energy density and lower battery unit energy costs, which can significantly improve user experience and create commercial value. However, because the alkali metal negative electrode has problems such as high chemical activity (resulting in low coulombic efficiency), dendrite growth (resulting in a side reaction and a potential safety hazard), and large volume expansion (continuous rupture and reconstruction of SEI films), a commercialization process of a high energy density alkali metal battery is impeded.

A study shows that a stable interface can be constructed on a surface of an alkali metal negative electrode in a physical or chemical manner, to reduce surface activity, homogenize ion flows, and alleviate dendrite growth. At present, however, there is no solution of constructing a stable interface that is effective and can achieve large-scale production.

### SUMMARY

In view of this, this application provides a metal negative electrode, and a surface of the metal negative electrode has a protective layer. The protective layer has extremely good wettability to a lithium metal negative electrode, so as to ensure continuously good ion conduction between a lithium negative electrode body and another component of a battery during a charging or discharging process. In addition, because an inner structure of the protective layer has good dissolvability to lithium metal, this design can fundamentally eliminate a risk of dendrite growth of a lithium secondary battery, and greatly improve battery cycle performance and long-term reliability.

Specifically, a first aspect of this application provides a metal negative electrode. The metal negative electrode includes a metal negative electrode body and a protective layer formed on a surface of one side or each of two sides of the metal negative electrode body, and the protective layer includes a double-layer structure including a liquid-state or gel-state inner layer that has an ability to dissolve alkali metal and a solid-state outer layer that has a high ionic conductivity. The liquid-state or gel-state inner layer that has an ability to dissolve alkali metal includes an aromatic hydrocarbon small molecule compound or a polymer containing an aromatic hydrocarbon group that has an ability to accept an electron, and an ether, amine, or thioether small molecule solvent or a polyether, polyamine, or polythioether polymer that has an ability to complex lithium ions. The liquid-state or gel-state inner layer can dissolve alkali metal in a physical manner by using a synergistic effect of different solvents/polymers, so as to resolve a dendrite problem in a charging or discharging process of this type of metal negative electrode.

In this application, the aromatic hydrocarbon small molecule compound includes biphenyl, naphthalene, phenanthrene, anthracene, tetracene, pyrene, and the like; and the polymer containing an aromatic hydrocarbon group includes a polymer containing aromatic groups such as biphenyl, naphthalene, phenanthrene, anthracene, tetracene, and pyrene.

In this application, the ether solvent includes but is not limited to chain ether such as ethylene glycol dimethyl ether, ethylene glycol diethyl ether, diethylene glycol dimethyl ether, and tetraethylene glycol dimethyl ether, and cyclic ether such as tetrahydrofuran, 1,4-dioxane, 12-crown ether-4, 15-crown ether-5, and 18-crown ether-6. The amine small molecule solvent includes but is not limited to ethylenediamine dimethylamine, ethylenediamine tetramethylamonium, diethylenediaminetetramethylamonium, and the like. The thioether small molecule solvent includes but is not limited to ethylene dithiol dimethyl thioether, ethylene dithiol diethyl thioether, diethylene dithiol dimethyl thioether, tetraethylene dithiol dimethyl thioether, and the like. The polyether polymer includes but is not limited to polyethylene oxide and polypropylene oxide. The polyamine polymer includes but is not limited to polymethyl ethylenediamine, polymethyl methacrylate ethylenediamine, and the like. The polythioether polymer includes but is not limited to polyethylene dithiol, methyl polyethylene dithiol, and the like.

In this application, the liquid-state or gel-state inner layer that has an ability to dissolve alkali metal may contain another polymer different from aromatics, polyether, polyamine, and polythioether, including but not limited to: one or more of polyfluorinated olefin polymers such as PVDF, PVDF-HFP, and PTFE; polynitrile polymers such as PAN; one or more of poly 2,4-toluene diisocyanate polyurethane polymers; one or more of polyamide polymers such as PA11 and PA66; and polyimide such as polybismaleimide or polyamide-imide polymer.

In this application, the solid-state outer layer that has a high ionic conductivity contains an oxide solid electrolyte or a sulfide solid electrolyte that is common in the art. For example, the oxide solid electrolyte is a perovskite solid electrolyte, a sodium fast ionic conductor solid electrolyte (that is, a NASICON solid electrolyte), a lithium fast ionic conductor solid electrolyte (that is, a LISICON solid electrolyte), a garnet solid electrolyte, or a glass oxide solid electrolyte. The sulfide solid electrolyte is a thio-lithium fast ionic conductor (that is, a thio-LISICON solid electrolyte), a glass sulfide solid electrolyte, or a compound of the foregoing inorganic solid electrolytes.

In this application, the solid-state outer layer that has a high ionic conductivity may contain a specific amount of polymer component, which includes but is not limited to a polyfluorinated olefin polymer, a polynitrile polymer, a polyurethane polymer, a polyamide polymer, a polyimide polymer, or a polyamide-imide polymer.

In this application, a thickness of the solid-state outer layer that has a high ionic conductivity is from 0.1 to 50 microns.

In this application, in the metal negative electrode, the metal negative electrode body includes a lithium negative electrode, a sodium negative electrode, a potassium negative electrode, or an alloy that includes lithium metal, sodium metal, and potassium metal.

In this application, the alloy including lithium metal includes at least one of lithium metal, a lithium-silicon alloy, a lithium-sodium alloy, a lithium-cesium alloy, a lithium-aluminum alloy, a lithium-tin alloy, and a lithium-indium alloy.

In the metal negative electrode according to the first aspect of this application, by using a liquid-state or a gel layer, at which lithium metal can be dissolved, on the surface of the alkali metal negative electrode body, a battery short-circuit risk caused by continuous growth of lithium dendrites on a negative electrode surface when a lithium metal secondary battery is in a repeated charging or discharging process can be eliminated in theory. In addition, even in an extreme condition, before a part of freshly generated lithium dendrites are fully dissolved, the lithium dendrites disengage from contact with a lithium negative electrode body during a discharging process. However, because the liquid-state or gel layer after the lithium metal is dissolved has a high electronic conductivity, the part of lithium dendrites disengaged from the lithium negative electrode body can still participate in electrode reaction until being fully consumed.

According to a second aspect, this application further provides a preparation method for a metal negative electrode, including:
forming a protective layer on a surface of one side or each of two sides of a metal negative electrode body, where the protective layer includes a double-layer structure including a liquid-state or gel-state inner layer that has an ability to dissolve alkali metal and a solid-state outer layer that has a high ionic conductivity. The liquid-state or gel-state inner layer that has an ability to dissolve alkali metal includes an aromatic hydrocarbon small molecule compound or a polymer containing an aromatic hydrocarbon group that has an ability to accept an electron, and an ether, amine, or thioether small molecule solvent or a polyether, polyamine, or polythioether polymer that has an ability to complex lithium ions. The solid-state outer layer that has a high ionic conductivity contains an oxide solid electrolyte or a sulfide solid electrolyte that is common in the art. For example, the oxide solid electrolyte is a perovskite solid electrolyte, a sodium fast ionic conductor solid electrolyte (that is, a NASICON solid electrolyte), a lithium fast ionic conductor solid electrolyte (that is, a LISICON solid electrolyte), a garnet solid electrolyte, or a glass oxide solid electrolyte. The sulfide solid electrolyte is a thio-lithium fast ionic conductor (that is, a thio-LISICON solid electrolyte), a glass sulfide solid electrolyte, or a compound of the foregoing inorganic solid electrolytes.

In this application, when the protective layer includes a gel-state inner layer that has an ability to dissolve alkali metal and an inorganic solid electrolyte outer layer, a specific operation of forming a protective layer on a surface of one side or each of two sides of a metal negative electrode body is:

After the metal negative electrode body surface is coated with a gel containing an aromatic hydrocarbon small molecule compound or a polymer containing an aromatic hydrocarbon group that has an ability to accept an electron, and an ether, amine, or thioether small molecule solvent or a polyether, polyamine, or a polythioether polymer that has an ability to complex lithium ions, compounding the whole with an inorganic solid electrolyte membrane.

In this application, when the protective layer includes a liquid-state inner layer that has an ability to dissolve alkali metal and an inorganic solid electrolyte outer layer, a specific operation of forming a protective layer on a surface of one side or each of two sides of a metal negative electrode body is:

After a lithium metal negative electrode is compounded with an inorganic solid electrolyte membrane, injecting, into an interlayer, a compound of aromatic hydrocarbon and the ether, amine, or thioether small molecule solvent, or the polyether, polyamine, or polythioether polymer.

In this application, a coating manner includes at least one of drop coating, brush coating, roll coating, spraying, scrape coating, dip coating, and spin coating, and the coating operation is performed in a dry environment and a protective atmosphere. In an implementation of this application, a coating time is 1 min-24 h, and a coating temperature is -10°C-50°C.

The preparation method for a metal negative electrode according to the second aspect of this application has a simple process, and mass production is possible.

This application further provides a secondary battery, including a positive electrode plate, a negative electrode plate, a diaphragm, and an electrolyte, where the negative electrode plate includes the metal negative electrode according to the first aspect of embodiments of this application. The secondary battery is of high cycle performance and high safety.

### BRIEF DESCRIPTION OF DRAWINGS

FIG. 1 is a schematic diagram of a structure of a lithium ion secondary battery in the conventional technology;
FIG. 2 is a schematic diagram of a structure of a metal negative electrode according to an embodiment of this application;
FIG. 3 is a scanning electron microscope (SEM) photograph of a lithium negative electrode after 100 cycles in Embodiment 1 of this application;
FIG. 4 is a scanning electron microscope (SEM) photograph of a lithium negative electrode after 100 cycles in Comparative example 1 of this application; and
FIG. 5 is a diagram of cyclic curves of batteries according to Embodiments 1 to 5 and Comparative examples 1 and 2 of this application.

### DESCRIPTION OF EMBODIMENTS

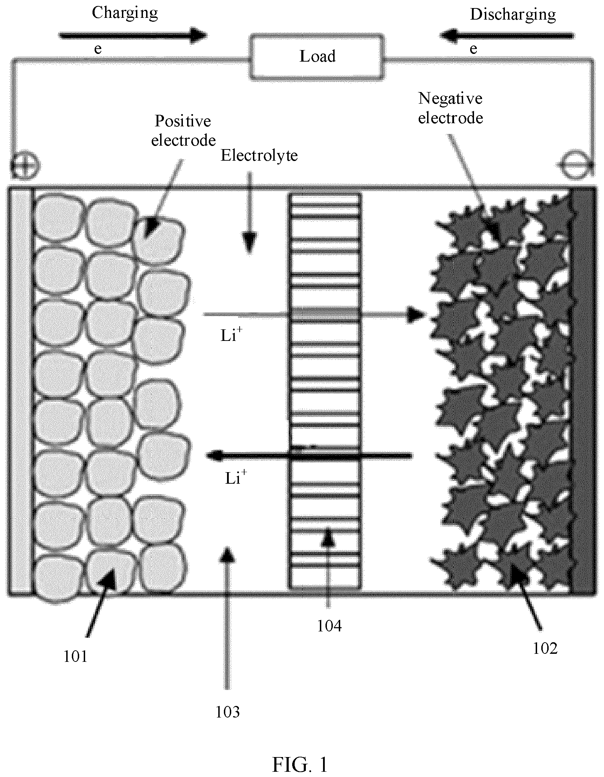

The following uses an alkali metal battery as an example to describe a system or a scenario in which embodiments of this application are implemented. Core components of the alkali metal battery are mainly a positive electrode, a metal negative electrode, an electrolyte, and a diaphragm. FIG. 1 is a schematic diagram of a structure of a lithium metal battery in an alkali metal battery in the conventional technology. During charging, lithium ions are removed from a lattice of a positive electrode material, and are deposited into a lithium metal negative electrode after passing through an electrolyte. During discharging, lithium ions are removed from the lithium metal negative electrode and inserted into the lattice of the positive electrode material after passing through the electrolyte. In a charging and discharging cycle process, an interface protective film is unstable, and freshly deposited lithium metal is exposed and directly contacts the electrolyte, causing a serious side reaction and inducing lithium dendrite formation, thereby reducing coulombic efficiency and causing safety problems. In embodiments of this application, a double-layer structure with an inner protective layer and an outer protective layer is formed on a surface of one side or each of two sides of a metal negative electrode body in an existing alkali metal negative electrode, so as to effectively resolve the foregoing problem in the conventional technology.

The following describes embodiments of this application with reference to accompanying drawings in embodiments of this application.

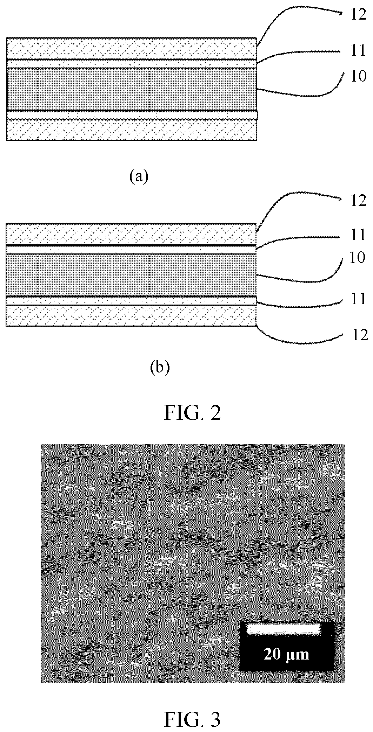

Referring to FIG. 2, an embodiment of this application provides a schematic diagram of a metal negative electrode. As shown in FIG. 2 (a), the metal negative electrode includes a metal negative electrode body 10 and an inner protective layer 11 and an outer protective layer 12 that are formed on a surface of one side of the metal negative electrode body 10. As shown in FIG. 2 (b), the metal negative electrode includes a metal negative electrode body 10 and an inner protective layer 11 and an outer protective layer 12 that are formed on surfaces of two sides of the metal negative electrode body 10. The one side or the two sides of the metal negative electrode body 10 is or are one side or two sides facing an electrolyte in a secondary battery.

The inner protective layer 11 is a liquid-state or gel-state inner layer that has an ability to dissolve alkali metal, and contains at least one of an aromatic hydrocarbon small molecule compound and a polymer containing an aromatic hydrocarbon group that have an ability to accept an electron, and at least one of an ether small molecule solvent, an amine small molecule solvent, a thioether small molecule solvent, a polyether polymer, a polyamine polymer, and a polythioether polymer that have an ability to complex lithium ions. The liquid-state or gel-state inner layer can dissolve alkali metal in a physical manner by using a synergistic effect of the foregoing substances, so as to resolve a dendrite problem in a charging or discharging process of this type of metal negative electrode.

In addition, the outer protective layer 12 is a solid-state outer layer with a high ionic conductivity, and includes an oxide solid electrolyte or a sulfide solid electrolyte. Specifically, the oxide solid electrolyte includes a perovskite solid electrolyte, a sodium fast ionic conductor solid electrolyte (that is, a NASICON solid electrolyte), a lithium fast ionic conductor solid electrolyte (that is, a LISICON solid electrolyte), a garnet solid electrolyte, a glass oxide solid electrolyte, or the like. The sulfide solid electrolyte includes a thio-lithium fast ionic conductor solid electrolyte (that is, a thio-LISICON solid electrolyte), a glass sulfide solid electrolyte, or a compound of the foregoing inorganic solid electrolytes.

In an implementation of this application, the metal negative electrode body 10 may be a lithium negative electrode, a sodium negative electrode, a potassium negative electrode, or an alloy that includes lithium metal, sodium metal, and potassium metal. Specifically, the lithium metal alloy is an alloy composed of lithium metal and at least one of other elements such as silicon, sodium, cesium, aluminum, potassium, tin, and indium. The sodium metal alloy is an alloy composed of sodium metal and at least one of other elements such as silicon, lithium, potassium, cesium, aluminum, tin, and indium. The potassium metal alloy is an alloy composed of potassium metal and at least one of other elements such as silicon, sodium, cesium, aluminum, tin, lithium, and indium.

Specifically, for example, the metal negative electrode body 10 is a lithium negative electrode. In this embodiment of this application, the inner protective layer 11 contains an aromatic hydrocarbon small molecule compound that has an ability to accept an electron and an ether, amine, or thioether small molecule solvent that has an ability to complex lithium ions. These small molecule solvents have a relatively high solubility to alkali metal by using a synergistic effect, and a battery short-circuit risk caused by continuous growth of lithium dendrites on a surface of the lithium negative electrode when a lithium metal secondary battery is in a repeated charging or discharging process can be reduced in theory. In addition, even in an extreme condition, before a part of freshly generated lithium dendrites are fully dissolved, the lithium dendrites disengage from contact with a lithium negative electrode body during a discharging process. However, because the liquid-state or gel layer after the lithium metal is dissolved has a high electronic conductivity, the part of lithium dendrites disengaged from the lithium negative electrode body can still participate in electrode reaction until being fully consumed. A mixture of the foregoing small molecule solvents may be mixed with polymers other than aromatics, polyether, polyamine, and polythioether, such as PVDF-HFP, to form a gel for coating on a surface of the metal negative electrode body. An oxide solid electrolyte, such as a garnet solid electrolyte, may be selected for the outer protective layer 12.

In another embodiment of this application, the inner protective layer 11 may also include a gel formed by an aromatic hydrocarbon small molecule compound and a polyether polymer. An oxide solid electrolyte, such as a garnet solid electrolyte, may be selected for the outer protective layer 12.

In another embodiment of this application, the inner protective layer 11 may also include a gel formed by an ether small molecule compound and a polymer containing an aromatic group. An oxide solid electrolyte, such as a Nasicon solid electrolyte, may be selected for the outer protective layer 12.

In another embodiment of this application, the inner protective layer 11 may also include a mixed liquid formed by an ether small molecule compound and an aromatic hydrocarbon small molecule compound. An oxide solid electrolyte, such as a ceramic sulfide solid electrolyte of Thio-Nasicon, may be selected for the outer protective layer 12.

Optionally, the metal negative electrode body in this application includes a lithium negative electrode, a sodium negative electrode, a potassium negative electrode, a lithium alloy negative electrode, a sodium alloy negative electrode, or a potassium alloy negative electrode. The lithium alloy negative electrode is an alloy composed of lithium metal and other elements, and the other elements include at least one of silicon, sodium, potassium, cesium, aluminum, tin, and indium.

Correspondingly, an embodiment of this application further provides a preparation method for the foregoing metal negative electrode, including:
coating the surface of the metal negative electrode body with the liquid-state or gel-state inner layer that has an ability to receive an electron. After the metal negative electrode is coated with the liquid-state or gel-state inner layer, the solid-state outer layer is formed on the liquid-state or gel-state inner layer, for example, the liquid-state or gel-state inner layer is fitted to the solid-state outer layer. Optionally, after the metal negative electrode is fitted to the solid-state outer layer, the liquid-state or gel-state inner layer is injected into an interlayer between the metal negative electrode body and an inorganic solid electrolyte membrane. The liquid-state or gel-state inner layer includes at least one of an aromatic hydrocarbon small molecule compound and a polymer containing an aromatic hydrocarbon group that have an ability to accept an electron, and at least one of an ether small molecule solvent, an amine small molecule solvent, a thioether small molecule solvent, a polyether polymer, a polyamine polymer, and a polythioether polymer that have an ability to complex lithium ions.

Optionally, the aromatic hydrocarbon small molecule compound includes at least one of biphenyl, naphthalene, phenanthrene, anthracene, tetracene, and pyrene. The polymer containing an aromatic hydrocarbon group includes at least one of biphenyl, naphthalene, phenanthrene, anthracene, tetracene, and pyrene aromatic groups.

The ether small molecule solvent includes at least one of chain ether such as ethylene glycol dimethyl ether, ethylene glycol diethyl ether, diethylene glycol dimethyl ether, and tetraethylene glycol dimethyl ether, and at least one of cyclic ether such as tetrahydrofuran, 1,4-dioxane, 12-crown ether-4, 15-crown ether-5, and 18-crown ether-6. The amine small molecule solvent includes at least one of ethylenediamine dimethylamine, ethylenediamine tetramethylamonium, and diethylenediaminetetramethylamonium. The thioether small molecule solvent includes at least one of ethylene dithiol dimethyl thioether, ethylene dithiol diethyl thioether, diethylene dithiol dimethyl thioether, and tetraethylene dithiol dimethyl thioether. The polyether polymer includes at least one of polyethylene oxide and polypropylene oxide. The polyamine polymer includes at least one of polymethyl ethylenediamine and polymethyl methacrylate ethylenediamine. The polythioether polymer includes at least one of polyethylene dithiol and methyl polyethylene dithiol.

Optionally, the liquid-state or gel-state inner layer that has an ability to dissolve alkali metal may include another polymer different from aromatics, polyether, polyamine, and polythioether. For example, the liquid-state or gel-state inner layer that has an ability to dissolve alkali metal further includes at least one of a polyfluorinated olefin polymer, a polynitrile polymer such as PAN, a polyamide polymer, a polyimide polymer, and a polyamide-imide polymer. The polyfluorinated olefin polymer includes one or more of PVDF, PVDF-HFP, and PTFE. The polyamine ester polymer includes a poly 2,4-toluene diisocyanate polyamine ester polymer. The polyamide polymer includes one or more of polymers such as PA11 and PA66.

In an implementation of this application, a coating manner includes at least one of drop coating, brush coating, roll coating, spraying, scrape coating, dip coating, and spin coating, and the coating operation is performed in a dry environment and a protective atmosphere. A coating time is 1 min-24 h, and a coating temperature is -10°C-50°C.

The preparation method for a metal negative electrode according to this embodiment of this application has a simple process, and mass production is possible.

An embodiment of this application further provides a secondary battery, where the secondary battery includes a positive electrode plate, a negative electrode plate, a diaphragm, and an electrolyte. The negative electrode plate includes the foregoing metal negative electrode according to the embodiment of this application. The metal negative electrode may be a lithium negative electrode, a sodium negative electrode, a potassium negative electrode, a magnesium negative electrode, a zinc negative electrode, or an aluminum negative electrode. Correspondingly, the secondary battery may be a lithium secondary battery, a sodium secondary battery, a potassium secondary battery, or the like. The secondary battery is of high cycle performance and high safety.

In this embodiment of this application, the electrolyte includes a solvent and metal salt. Specifically, the solvent includes one or more of a carbonic ester solvent, an ether solvent, and a carboxylic ester solvent. The carbonic ester solvent includes a cyclic carbonate or a chain carbonate. The cyclic carbonate may be specifically one or more of ethylene carbonate (EC), propylene carbonate (PC), gamma butyrolactone (GBL), butyl carbonate (BC), fluoroethylene carbonate (FEC), and vinylene carbonate (VC). The chain carbonate may be specifically one or more of dimethyl carbonate (DMC), ethyl methyl carbonate (EMC), diethyl carbonate (DEC), and dipropyl carbonate (DPC). The ether solvent includes cyclic ether or chain ether. The cyclic ether may be specifically one or more of 1,3-dioxolane (DOL), 1,4-dioxane (DX), crown ether, tetrahydrofuran (THF), 2-methyltetrahydrofuran (2-CH₃-THF), and 2-trifluoromethyltetrahydrofuran (2-CF₃-THF). The chain ether may be specifically one or more of dimethoxymethane (DMM), 1,2-dimethoxyethane (DME), and diethylene glycol dimethyl ether (TEGDME). The carboxylic ester solvent may be specifically one or more of methyl acetate (MA), ethyl acetate (EA), propyl acetate (EP), butyl acetate, propyl propionate (PP), and butyl propionate. An anion of the metal salt includes but is not limited to one or more of a hexafluorophosphate anion (PF₆⁻), a hexafluoroarsenic anion (AsF₆⁻), a perchlorate anion (ClO₄⁻), a tetrafluoroborate anion (BF₄⁻), a dioxalate borate anion (B (C₂O₄)₂⁻, BOB⁻), a difluoroethylene borate anion (BF₂C₂O₄⁻, DFOB⁻), a difluoride sulfonimide anion (FSI⁻), and a bistrifluorosulfonimide anion (TFSI⁻).

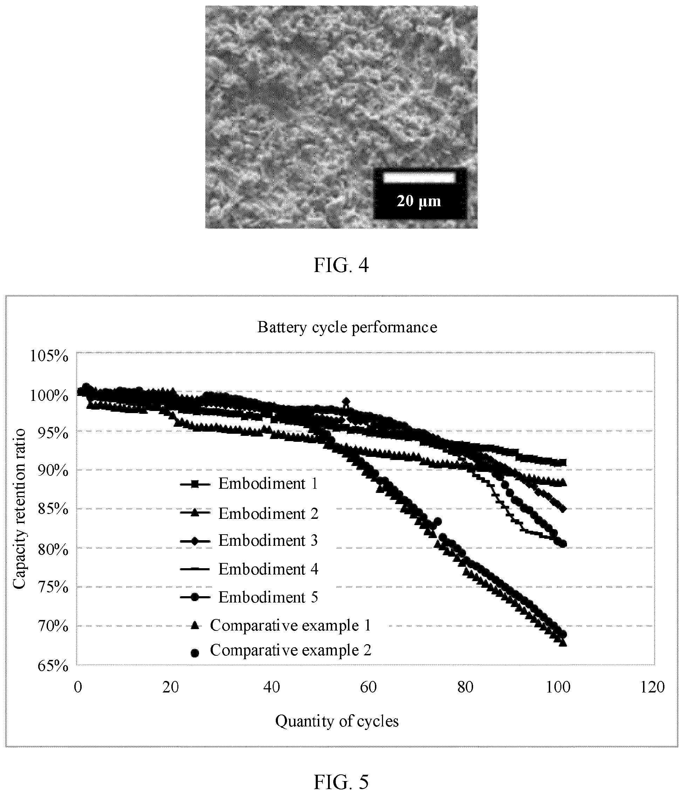

As shown in FIG. 5, an embodiment of this application further provides a terminal 200. The terminal 200 may be an electronic product such as a mobile phone, a tablet computer, an intelligent wearable product, or an electric vehicle. Specifically, for example, the terminal is a mobile phone 200 and includes a housing 100 assembled outside the terminal, and a circuit board and a battery (not shown in the figure) that are located inside the housing 100. The battery is the secondary battery provided in the foregoing embodiment of this application. The housing 100 may include a display screen assembled on a front side of the terminal and a rear cover assembled on a rear side, and the battery may be fixed inside the rear cover to supply power to the terminal 200.

The following further describes embodiments of this application by using a plurality of embodiments.

### Embodiment 1

Preparation of a lithium metal battery includes:
(1) Preparation of a protective lithium negative electrode: In an environment without water or oxygen, dissolve 0.07 g lithium metal and 1.54 g biphenyl in an ethylene glycol dimethyl ether solution to form a homogeneous solution, and dissolve 0.01 g PVDF-HFP in a heated condition to form a gel after cooling. Then, coat a surface of an unprotected lithium metal negative electrode body with the foregoing homogeneous slurry, and compound it with a 50 µm LLZO ceramic plate to obtain a lithium metal negative electrode plate with a double-layer protective structure that contains a 10 µm gel protective layer.
(2) Lithium cobalt oxide/lithium (LiCoO₂/Li) battery assembly: Assemble the foregoing prepared protective lithium negative electrode, a lithium cobalt oxide positive electrode, and a diaphragm into a battery, and dropwise add 50 µL 1.0 mol/L LiPF₆ electrolyte (a weight ratio of DMC, FEC, and VC is 45:52:3) on a positive electrode end to soak a positive electrode plate, the diaphragm, and an outer surface of a composite lithium metal negative electrode LLZO ceramic plate.

### Embodiment 2

Preparation of a lithium metal battery includes:
(1) Preparation of a protective lithium negative electrode: In an environment without water or oxygen, dissolve 0.07 g lithium metal and 1.54 g biphenyl in a THF solution of polyethylene oxide (PEO) to form homogeneous slurry. Then, coat a surface of an unprotected lithium metal negative electrode body with the homogeneous slurry, and compound it with a 50 µm LLZO ceramic plate after the THF is dried and removed, to obtain a lithium metal negative electrode plate with a double-layer protective structure that contains a 10 µm gel protective layer.
(2) Lithium cobalt oxide/lithium (LiCoO₂/Li) battery assembly: Assemble the foregoing prepared protective lithium negative electrode, a lithium cobalt oxide positive electrode, and a diaphragm into a battery, and dropwise add 50 µL 1.0 mol/L LiPF₆ electrolyte (a weight ratio of DMC, FEC, and VC is 45:52:3) on a positive electrode end to soak a positive electrode plate, the diaphragm, and an outer surface of a composite lithium metal negative electrode LLZO ceramic plate.

### Embodiment 3

Preparation of a lithium metal battery includes:
(1) Preparation of a protective lithium negative electrode: In an environment without water or oxygen, heat and dissolve 0.07 g lithium metal and 1.8 g poly 4-vinyl biphenyl in ethylene glycol dimethyl ether to form a gel after cooling. Then, coat a surface of an unprotected lithium metal negative electrode body with the gel, and compound it with a 50 µm LLZO ceramic plate, to obtain a lithium metal negative electrode plate with a double-layer protective structure that contains a 10 µm gel protective layer.
(2) Lithium cobalt oxide/lithium (LiCoO₂/Li) battery assembly: Assemble the foregoing prepared protective lithium negative electrode, a lithium cobalt oxide positive electrode, and a diaphragm into a battery, and dropwise add 50 µL 1.0 mol/L LiPF₆ electrolyte (a weight ratio of DMC, FEC, and VC is 45:52:3) on a positive electrode end to soak a positive electrode plate, the diaphragm, and an outer surface of a composite lithium metal negative electrode LLZO ceramic plate.

### Embodiment 4

Preparation of a lithium metal battery includes:
(1) Preparation of a protective lithium negative electrode: In an environment without water or oxygen, dissolve 0.07 g lithium metal and 1.54 g biphenyl in an ethylene glycol dimethyl ether solution to form a homogeneous solution, and dissolve 0.01 g PVDF-HFP in a heated condition to form a gel after cooling. Then, coat a surface of an unprotected lithium metal negative electrode body with the foregoing homogeneous slurry, and compound it with a 50 µm Li3PS4 solid electrolyte plate to obtain a lithium metal negative electrode plate with a double-layer protective structure that contains a 10 µm gel protective layer.
(2) Lithium cobalt oxide/lithium (LiCoO₂/Li) battery assembly: Assemble the foregoing prepared protective lithium negative electrode, a lithium cobalt oxide positive electrode, and a diaphragm into a battery, and dropwise add 50 µL 1.0 mol/L LiPF₆ electrolyte (a weight ratio of DMC, FEC, and VC is 45:52:3) on a positive electrode end to soak a positive electrode plate, the diaphragm, and an outer surface of a composite lithium metal negative electrode Li3PS4 solid electrolyte plate.

### Embodiment 5

Preparation of a sodium metal battery includes:
(1) Preparation of a protective lithium negative electrode: In an environment without water or oxygen, dissolve 0.23 g sodium metal and 1.54 g biphenyl in an ethylene glycol dimethyl ether solution to form a homogeneous solution, and dissolve 0.01 g PVDF-HFP in a heated condition to form a gel after cooling. Then, coat a surface of an unprotected lithium metal negative electrode body with the foregoing homogeneous slurry, and compound it with a 50 µm Na(4-x)Sn(1-x)SbxS4 solid electrolyte plate to obtain a sodium metal negative electrode plate with a double-layer protective structure that contains a 10 µm gel protective layer.
(2) Na2MnFe(CN)₆/Na battery assembly: Assemble the foregoing prepared protective lithium negative electrode, a Na2MnFe(CN)₆ positive electrode, and a diaphragm into a battery, and dropwise add 50 µL 1.0 mol/L NaPF₆ electrolyte (a weight ratio of DMC, FEC, and VC is 45:52:3) on a positive electrode end to soak a positive electrode plate, the diaphragm, and an outer surface of a composite sodium metal negative electrode Na(4-x)Sn(1-x)SbxS4 solid electrolyte plate.

### Comparative example 1

LiCoO₂/Li battery assembly: Assemble an unprotected lithium metal negative electrode body, a lithium cobalt oxide positive electrode, and a diaphragm into a battery, and dropwise add 50 µL 1.0 mol/L LiPF₆ electrolyte (a weight ratio of DMC, FEC, and VC is 45:52:3).

### Comparative example 2

Na2MnFe(CN)₆/Na battery assembly: Assemble an unprotected sodium metal negative electrode body, a Na2MnFe(CN)₆ positive electrode, and a diaphragm into a battery, and dropwise add 50 µL 1.0 mol/L NaPF₆ electrolyte (a weight ratio of DMC, FEC, and VC is 45:52:3).

To strongly support the beneficial effects of the technical solutions in this embodiment, the following tests are provided.

1. Charging and discharging tests are performed on the batteries assembled in Embodiments 1 to 5 and Comparative examples 1 and 2 according to a 0.1C/0.2C charging and discharging system. A voltage range of the lithium metal battery is 3.0 V-4.5 V, a voltage range of the sodium metal battery is 2.5 V-4.0 V, and test results of capacity retention ratios after 100 weeks are shown in Table 1 and FIG. 5.

**Table 1 Performance test results of batteries assembled by using different lithium negative electrodes**

| Serial number | Lithium negative electrode type | Capacity retention ratio after 100 weeks |
|---|---|---|
| Embodiment 1 | LLZO/Liquid metal A protects a lithium metal negative electrode | 90.8% |
| Embodiment 2 | LLZO/Liquid metal gel B protects a lithium metal negative electrode | 88.3% |
| Embodiment 3 | LLZO/Liquid metal gel C protects a lithium metal negative electrode | 80.9% |
| Embodiment 4 | Li3PS4/Liquid metal A protects a lithium metal negative electrode | 80.9% |
| Embodiment 5 | Na(4-x)Sn(1-x)SbxS4/Liquid metal D protects a sodium metal negative electrode | 85.6% |
| Comparative example 1 | Unprotected lithium metal negative electrode | 68.4% |
| Comparative example 2 | Unprotected sodium metal negative electrode | 69.5% |

It can be learned from the test results in Table 1 and FIG. 5 that capacity retention ratios of the lithium cobalt oxide/lithium batteries in Embodiments 1 to 4 and the sodium metal battery in Embodiment 5 after 100 weeks are much higher than capacity retention ratios of the lithium cobalt oxide/lithium battery in Comparative example 1 and the sodium metal battery in Comparative example 2 after 100 weeks. This indicates that battery cycle performance can be significantly improved by using an alkali metal negative electrode with double protection from liquid metal and a solid electrolyte. On the one hand, a double-layer protective layer isolates the alkali metal negative electrode from contacting a carbonic ester electrolyte, and avoids a loss of active lithium/sodium due to continuous side reaction between alkali metal and the electrolyte. On the other hand, due to good wettability of a liquid metal inner layer, continuous and stable interface contact between a solid electrolyte layer and a metal negative electrode can be kept, so as to ensure that lithium metal deposition is as homogeneous as possible. In addition, for dendrites growing in extreme cases, a good conductivity of the liquid metal and a solubility of the alkali metal can fundamentally solve a metal negative electrode pulverization problem and a possible safety risk caused by dendrites. The batteries obtained after a 100-week cyclic test in Embodiment 1 and Comparative example 1 are disassembled, and negative electrode surface appearances of the batteries are shown in FIG. 3 (Embodiment 1) and FIG. 4 (Comparative example 1). It can be clearly seen from the figures that, after being protected by a liquid metal layer that has an ability to dissolve an alkali metal dendrite, a surface of a lithium metal negative electrode is still relatively flat after a 100-week cycle (FIG. 3), and a surface of a lithium negative electrode that is exposed to an electrolyte for cycle (FIG. 4) is relatively rough, which proves that a large quantity of dendrites appear. This is exactly consistent with an expected effect.

An effect of Embodiment 1 is better than those of Embodiments 2 to 4, which proves that both a composition of a liquid metal inner layer and a chemical structure of a solid electrolyte protective layer have great impact on a protection effect. When the inner layer contains at least one of an aromatic hydrocarbon small molecule compound that has a relatively strong solubility to alkali metal and a polymer containing an aromatic hydrocarbon group, and a mixture composed of at least one of an ether small molecule solvent and a polyether polymer, a battery cycle capacity retention ratio is the highest. This indirectly proves that a liquid metal inner layer with an alkali metal dissolution effect is necessary for improving cycle life of an alkali metal battery.

The foregoing descriptions are merely specific implementations of this application, but are not intended to limit the protection scope of this application. Any variation or replacement readily figured out by a person skilled in the art within the technical scope disclosed in the present invention shall fall within the protection scope of this application. Therefore, the protection scope of this application shall be subject to the protection scope of the claims.

## Claims

1. A metal negative electrode, wherein the metal negative electrode comprises a metal negative electrode body and a protective layer formed on a surface of one side or each of two sides of the metal negative electrode body, and the protective layer comprises a double-layer structure comprising a liquid-state or gel-state inner layer that has an ability to dissolve alkali metal and a solid-state outer layer that has a high ionic conductivity; and the liquid-state or gel-state inner layer that has an ability to dissolve alkali metal comprises at least one of an aromatic hydrocarbon small molecule compound and a polymer containing an aromatic hydrocarbon group that have an ability to accept an electron, and at least one of an ether small molecule solvent, an amine small molecule solvent, a thioether small molecule solvent, a polyether polymer, a polyamine polymer, and a polythioether polymer that have an ability to complex lithium ions.

2. The metal negative electrode according to claim 1, wherein the aromatic hydrocarbon small molecule compound comprises at least one of biphenyl, naphthalene, phenanthrene, anthracene, tetracene, and pyrene; and the polymer containing an aromatic hydrocarbon group comprises at least one of biphenyl, naphthalene, phenanthrene, anthracene, tetracene, and pyrene aromatic groups.

3. The metal negative electrode according to claim 1 or 2, wherein the ether small molecule solvent comprises at least one of chain ether such as ethylene glycol dimethyl ether, ethylene glycol diethyl ether, diethylene glycol dimethyl ether, and tetraethylene glycol dimethyl ether, and at least one of cyclic ether such as tetrahydrofuran, 1,4-dioxane, 12-crown ether-4, 15-crown ether-5, and 18-crown ether-6; and
the amine small molecule solvent comprises at least one of ethylenediamine dimethylamine, ethylenediamine tetramethylamonium, and diethylenediaminetetramethylamonium; and the thioether small molecule solvent comprises at least one of ethylene dithiol dimethyl thioether, ethylene dithiol diethyl thioether, diethylene dithiol dimethyl thioether, and tetraethylene dithiol dimethyl thioether.

4. The metal negative electrode according to claims 1 to 3, wherein the polyether polymer comprises at least one of polyethylene oxide and polypropylene oxide, the polyamine polymer comprises at least one of polymethyl ethylenediamine and polymethyl methacrylate ethylenediamine, and the polythioether polymer comprises at least one of polyethylene dithiol and methyl polyethylene dithiol.

5. The metal negative electrode according to any one of claims 1 to 4, wherein the liquid-state or gel-state inner layer that has an ability to dissolve alkali metal further comprises at least one of a polyfluorinated olefin polymer, a polynitrile polymer, a polyamide polymer, a polyimide polymer, and a polyamide-imide polymer.

6. The metal negative electrode according to claim 5, wherein the polyfluorinated olefin polymer comprises at least one of PVDF, PVDF-HFP, and PTFE; the polynitrile polymer is PAN; the polyamine ester polymer comprises a poly 2,4-toluene diisocyanate polyamine ester polymer; the polyamide polymer comprises at least one of PA11 and PA66; and the polyimide is polybismaleimide.

7. The metal negative electrode according to any one of claims 1 to 6, wherein the solid-state outer layer that has a high ionic conductivity comprises an oxide solid electrolyte or a sulfide solid electrolyte.

8. The metal negative electrode according to claim 7, wherein the oxide solid electrolyte comprises any one of a perovskite solid electrolyte, a sodium fast ionic conductor solid electrolyte, a lithium fast ionic conductor solid electrolyte, a garnet solid electrolyte, or a glass oxide solid electrolyte; and the sulfide solid electrolyte comprises any one of a thio-lithium fast ionic conductor or glass sulfide solid electrolyte.

9. The metal negative electrode according to any one of claims 1 to 8, wherein the solid-state outer layer that has a high ionic conductivity further comprises at least one of a polyfluorinated olefin polymer, the polynitrile polymer, the polyurethane polymer, the polyamide polymer, a polyimide polymer, and the polyamide-imide polymer.

10. The metal negative electrode according to any one of claims 1 to 9, wherein a thickness of the solid-state outer layer that has a high ionic conductivity is from 0.1 to 50 microns.

11. The metal negative electrode according to any one of claims 1 to 10, wherein the metal negative electrode body comprises a lithium negative electrode, a sodium negative electrode, a potassium negative electrode, a lithium alloy negative electrode, a sodium alloy negative electrode, or a potassium alloy negative electrode.

12. The metal negative electrode according to claim 11, wherein the lithium alloy negative electrode comprises an alloy composed of lithium metal and other elements, and the other elements comprise at least one of silicon, sodium, potassium, cesium, aluminum, tin, and indium.

13. A preparation method for a metal negative electrode, comprising:
forming a protective layer on a surface of one side or each of two sides of a metal negative electrode body, wherein the protective layer comprises a double-layer structure comprising a liquid-state or gel-state inner layer that has an ability to dissolve alkali metal and a solid-state outer layer that has a high ionic conductivity; and the liquid-state or gel-state inner layer that has an ability to dissolve alkali metal comprises at least one of an aromatic hydrocarbon small molecule compound and a polymer containing an aromatic hydrocarbon group that have an ability to accept an electron, and at least one of an ether small molecule solvent, an amine small molecule solvent, a thioether small molecule solvent, a polyether polymer, a polyamine polymer, and a polythioether polymer that have an ability to complex lithium ions.

14. The preparation method for a metal negative electrode according to claim 13, wherein the forming a protective layer on a surface of one side or each of two sides of a metal negative electrode body, wherein the protective layer comprises a double-layer structure comprising a liquid-state or gel-state inner layer that has an ability to dissolve alkali metal and a solid-state outer layer that has a high ionic conductivity comprises: after coating the liquid-state or gel-state inner layer that has an ability to dissolve alkali metal on a surface of the metal negative electrode body, forming the solid-state outer layer on the liquid-state or gel-state inner layer.

15. The preparation method for a metal negative electrode according to claim 13, wherein the forming a protective layer on a surface of one side or each of two sides of a metal negative electrode body, wherein the protective layer comprises a double-layer structure comprising a liquid-state or gel-state inner layer that has an ability to dissolve alkali metal and a solid-state outer layer that has a high ionic conductivity comprises: after compounding the metal negative electrode body with the solid-state outer layer, injecting at least one of the aromatic hydrocarbon small molecule compound and the polymer containing an aromatic hydrocarbon group that have an ability to accept an electron, and at least one of the ether small molecule solvent, the amine small molecule solvent, the thioether small molecule solvent, the polyether polymer, the polyamine polymer, and the polythioether polymer that have an ability to complex lithium ions into an interlayer between the metal negative electrode body and the solid-state outer layer, to form the liquid-state or gel-state inner layer that has an ability to dissolve alkali metal.

16. The metal negative electrode according to any one of claims 13 to 15, wherein the aromatic hydrocarbon small molecule compound comprises at least one of biphenyl, naphthalene, phenanthrene, anthracene, tetracene, and pyrene; and the polymer containing an aromatic hydrocarbon group comprises at least one of biphenyl, naphthalene, phenanthrene, anthracene, tetracene, and pyrene aromatic groups.

17. The metal negative electrode according to any one of claims 13 to 16, wherein the ether small molecule solvent comprises at least one of chain ether such as ethylene glycol dimethyl ether, ethylene glycol diethyl ether, diethylene glycol dimethyl ether, and tetraethylene glycol dimethyl ether, and at least one of cyclic ether such as tetrahydrofuran, 1,4-dioxane, 12-crown ether-4, 15-crown ether-5, and 18-crown ether-6; the amine small molecule solvent comprises at least one of ethylenediamine dimethylamine, ethylenediamine tetramethylamonium, and diethylenediaminetetramethylamonium; the thioether small molecule solvent comprises at least one of ethylene dithiol dimethyl thioether, ethylene dithiol diethyl thioether, diethylene dithiol dimethyl thioether, and tetraethylene dithiol dimethyl thioether; and the polyether polymer comprises at least one of polyethylene oxide and polypropylene oxide, the polyamine polymer comprises at least one of polymethyl ethylenediamine and polymethyl methacrylate ethylenediamine, and the polythioether polymer comprises at least one of polyethylene dithiol and methyl polyethylene dithiol.

18. The metal negative electrode according to any one of claims 13 to 17, wherein the liquid-state or gel-state inner layer that has an ability to dissolve alkali metal further comprises at least one of a polyfluorinated olefin polymer, a polynitrile polymer, a polyamide polymer, a polyimide polymer, and a polyamide-imide polymer.

19. The preparation method for a metal negative electrode according to claims 13 to 18, wherein a coating manner comprises at least one of drop coating, brush coating, roll coating, spraying, scrape coating, dip coating, and spin coating, and coating is performed in a dry room or a protective atmosphere.

20. A secondary battery, comprising a positive electrode, a negative electrode, a diaphragm, and an electrolyte, wherein the negative electrode comprises the metal negative electrode according to any one of claims 1 to 12.

21. A terminal, comprising a housing, a circuit mainboard accommodated in the housing, and a display apparatus mounted on the housing and connected to the circuit mainboard, wherein the terminal comprises the secondary battery according to claim 20, and the secondary battery is configured to supply power to the circuit mainboard and the display apparatus.
